Europäisches Patentamt

European Patent Office

Office européen des brevets

(11) Veröffentlichungsnummer: **0 229 591**
B1

# EUROPÄISCHE PATENTSCHRIFT

(45) Veröffentlichungstag der Patentschrift:
04.04.90

(51) Int. Cl.⁴: **B62D 23/00**, B62D 29/00

(21) Anmeldenummer: 86810584.2

(22) Anmeldetag: 12.12.86

(54) Personenkraftwagen mit einem Skelett aus miteinander verbundenen Hohlprofilen.

(30) Priorität: 12.12.85 DE 3543929

(43) Veröffentlichungstag der Anmeldung:
22.07.87 Patentblatt 87/30

(45) Bekanntmachung des Hinweises auf die Patenterteilung:
04.04.90 Patentblatt 90/14

(84) Benannte Vertragsstaaten:
AT BE CH DE ES FR GB GR IT LI LU NL SE

(56) Entgegenhaltungen:
EP-A- 0 031 306
EP-A- 0 146 716
DE-A- 2 701 905
DE-A- 2 751 753
DE-B- 2 056 713
DE-U- 7 721 221

(73) Patentinhaber: SCHWEIZERISCHE ALUMINIUM AG,
CH-3965 Chippis(CH)

(72) Erfinder: Frank, Simon, Alterpostweg 4,
D-7708 Watterdingen(DE)

## Beschreibung

Die Erfindung betrifft einen Personenkraftwagen mit einem Skelett aus miteinander verbundenen Hohlprofilen als Träger für Teile eines Aufbaus, mit einem Bodenrahmen aus Kastenprofilen, wobei der Bodenrahmen sowohl als Tragrahmen dient als auch einen Teil der Fahrzeugaußenseite bildet.

Aus DE-U 7 721 221 ist ein Fahrzeug bekannt, bei dem es sich um einen Rohrrahmen für Kraftfahrzeuge aus Stahlrohren runden Querschnittes handelt, welche durch Steckverbindungen aneinandergefügt, also ohne thermische Beeinflussung montiert werden. Dieses Skelett, welches die Kontur des Fahrzeuges insgesamt fachwerkartig bestimmt, wird mit Blechteilen beplankt.

Durch die britische Zeitschrift "The Motor", 4/1958, S. 450 bis 452, ist es zudem bekannt, Leichtmetall, nämlich Magnesium, im Fahrzeugbau zu verwenden.

Weiterhin ist ein Fahrzeug der eingangs erwähnten Gattung aus DE-B 2 056 713 bekannt.

Angesichts dieses Standes der Technik hat sich der Erfinder das Ziel gesetzt, einen Personenkraftwagen zu entwickeln, der besonders leicht an Gewicht und in einfacher Weise zusammenzubauen ist. Darüber hinaus soll zudem der Vorzug genutzt werden, thermische Verbindungen der Einzelteile zu vermeiden.

Zur Lösung dieser Aufgabe führt, daß die Kastenprofile auf dem Wege des Strangpressens aus Leichtmetall, insbesondere aus Aluminium oder einer Aluminiumlegierung, hergestellt sind, und der Bodenrahmen von Beplankungsprofilen zum Aufbau ergänzt ist, welche in Aufnahmeorganen der/des Kastenprofile/s festgelegt sind.

Zudem hat es sich als günstig erwiesen, daß auch der Aufbau aus stranggepreßten Leichtmetallprofilen der beschriebenen Art zusammengesetzt ist, wobei diese miteinander bevorzugt auf nicht thermischem Wege verbunden sein sollen.

Somit sollen also entweder der Bodenrahmen oder der Aufbau oder beide zusammen nach der erfindungsgemäßen Konzeption gefertigt und die Leichtmetallprofile durch Steck- und/oder Schraubverbindungen aneinander festgelegt werden.

Nach einer Ausgestaltung der Erfindung besteht der Bodenrahmen aus wenigstens zwei Längsträgern und einem diese verbindenden, durch Eckstücke an die Längsträger angefügten Heckträger, wobei Längsträger und Heckträger als stranggepreßte Hohlprofile mit jeweils wenigstens einer seitlichen hinterschnittenen Nut ausgebildet sind.

Weitere Ausführungsformen der Erfindung sind den abhängigen Patentansprüchen zu entnehmen.

Weitere Vorteile und Einzelheiten der Erfindung ergeben sich aus der nachfolgenden Beschreibung bevorzugter Ausführungsbeispiele sowie anhand der Zeichnung; diese zeigt in

Fig. 1: die Seitenansicht eines Personenkraftwagens mit Bodenrahmen;

Fig. 2: die Draufsicht auf einen Teil des Bodenrahmens;

Fig. 3: die verkleinerte Frontansicht zu Fig. 1;

Fig. 4: die verkleinerte Heckansicht des Personenkraftwagens nach Fig. 1;

Fig. 5: einen Mittelträger des Bodenprofils im Querschnitt;

Fig. 6 bis Fig. 9 vergrößerte Teilquerschnitte durch Fig. 1 nach deren Linien VI - VI bis IX - IX;

Fig. 10: einen vergrößerten Teilquerschnitt durch Fig. 4 nach deren Linie X - X;

Fig. 11: einen vergrößerten Teilquerschnitt durch Fig. 3 nach deren Linie XI - XI;

Fig. 12, Fig. 13: gegenüber dem Bodenrahmen nach Fig. 2 vergrößerte Profilquerschnitte nach deren Linien XII bis XII und XIII - XIII;

Fig. 14: einen vergrößerten Ausschnitt aus dem Bodenrahmen nach Fig. 2 mit einem Eckverbinder;

Fig. 15: den Eckverbinder nach Fig. 14 in Schrägsicht und

Fig. 16: ein Detail aus Fig 14 in Draufsicht und Seitenansicht.

Ein jeepartiger Personenkraftwagen 10 weist einen durch Blattfedern 11 auf Vorder- und Hinterachse 12, 12h gelagerten Bodenrahmen 14 aus Längsträgern 15 der Länge a von beispielsweise 190 cm und einem damit durch gegossene Eckstücke 17 verbundenen Heckträger 16 der Länge b von beispielsweise 125 cm auf.

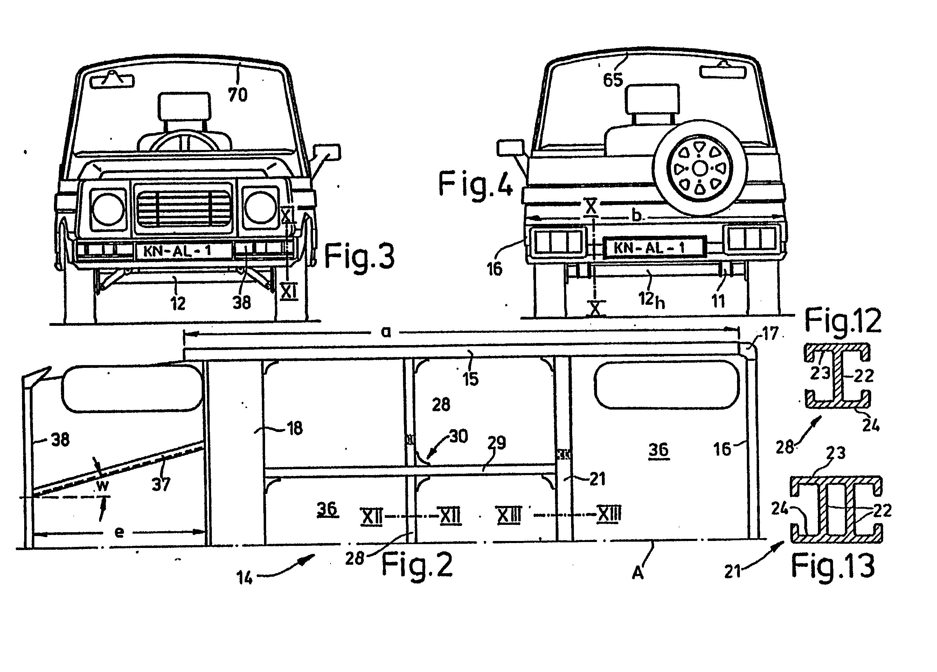

Zwischen den vorderen Enden der Längsträger 15 spannt sich ein Mittelträger 18 einer gesamten Höhe h von etwa 16 cm. Das gesamte Hohlprofil des Mittelträgers 18 setzt sich aus einem U-förmigen Trägerfuß 19 (Höhe $h_1$ = 4,5 cm) und einem davon aufragenden und frontwärts geneigten Trägerkopf 20 zusammen. Zwischen Mittelträger 18 und Heckträger 16 ist in Fig. 2 ein Querprofil 21 zu erkennen, welches gemäß Fig. 13 mit zwei Profilstegen 22 zwischen Obergurt 23 und Untergurt 24 ausgestattet ist.

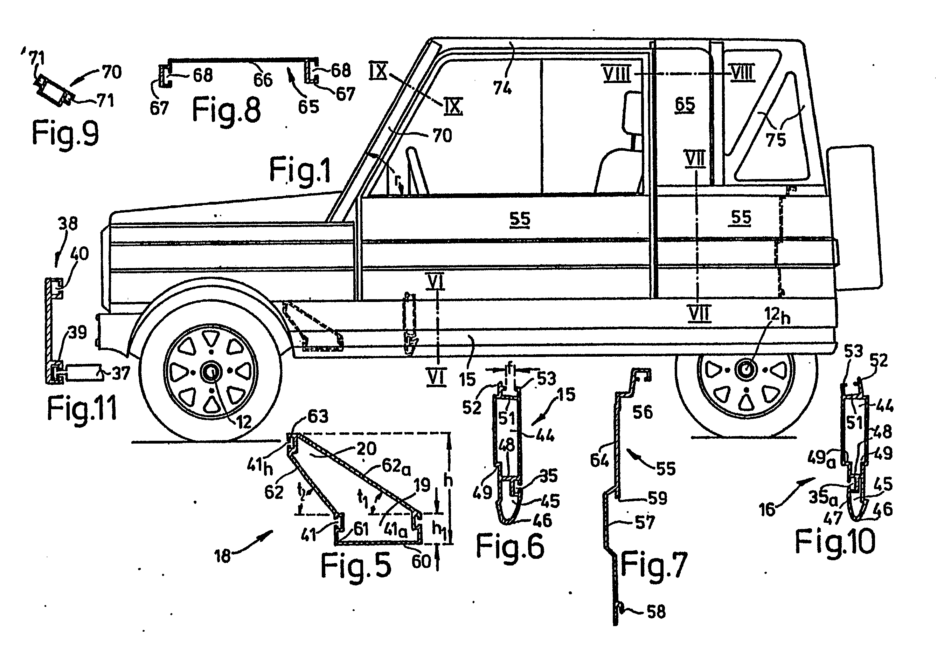

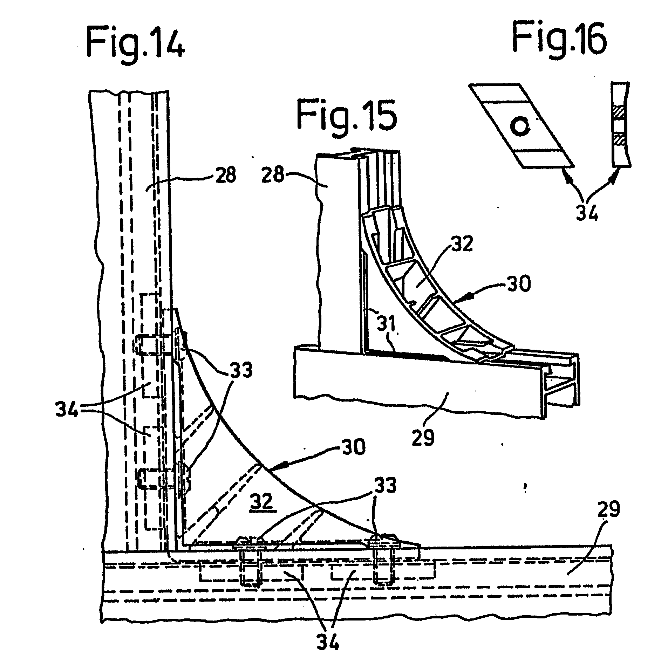

Sowohl der Mittelträger 18 als auch das Querprofil 21 sind beidends an die Längsträger 15 mittels Eckverbindern 30 angeschlossen. Letztere bestehen (Fig. 14,15,16) aus einem zwei rechtwinklige Anschlagflächen 31 anbietenden Formkörper 32, mit welchem durch Stellschrauben 33 Einschubplatten 34 parallelogrammartigen Grundrisses verbunden sind. Die Einschubplatten 34 werden beispielsweise in hinterschnittene Nuten 35 beim Längsträger 15 (Fig. 6) eingesetzt und mittels der Stellschrauben 31 festgelegt. So entsteht eine zuverlässige Klemmverbindung zwischen den durch einen Eckverbinder 30 zusammengehaltenen Profilen.

In der beschriebenen Weise sind auch parallel zur Fahrzeuglängsachse A gerichtete Zwischenprofile 29 und von diesen rechtwinklig ausgehende Querstäbe 28 beidends festgelegt; das I-Profil der Querstäbe 28 ist in Fig. 12 verdeutlicht und hat einen Profilsteg 22 zwischen Obergurt 23 und Untergurt 24.

Die durch dieses in beschriebener Weise gesteckte und verschraubte Rahmenwerk 15,16,18,21,28,29 entstehenden, in Fig.2 erkennbaren rechteckigen Felder können durch Blechtafeln 36 ausgefacht sein.

In einem Abstand e zum Mittelträger 18 verläuft ein an diesen durch Längsstäbe 37 angeschlossenes Frontprofil 38. Die Längsstäbe 37 sind zur Fahrzeuglängsachse A in einem Horizontalwinkel w geneigt und beidends mit Stirnplatten 39 in hinterschnittene Nuten 40, 41 von Frontprofil 38 bzw. Mittelträger 18 eingeschoben sowie darin klemmend festgelegt.

Längsträger 15 und Heckträger 16 sind -- gleich dem Mittelträger 18 -- aus Leichtmetall stranggepreßte Hohlprofile mit jeweils einer oberen Hauptkammer 44 und einer nach unten anschließenden Fußkammer 45 mit abwärts gerundeter Wandung 46; eine Längsseite 47 der Fußkammer 45 ist mit der hinterschnittenen Nut 35 bzw. 35a versehen, wobei eine der Nutwände durch eine Querwand 48 des Hohlprofiles von Längsträger und Heckträger 15,16 gebildet wird. Diese Querwand 48 trennt die Fußkammer 45 von der Hauptkammer 44.

Beim Querschnitt des Längsträgers 15 erweitert sich die Hauptkammer 44 durch einen stufenartigen Absatz 49; beim Heckträger 16 sind zwei derartige Absätze 49, 49a vorhanden, wie Fig. 10 erkennen läßt. Von der oberen Kammerquerwand 51 ragen sowohl beim Längsträger 15 als auch beim Heckträger 16 Anschlußstege 52, 53 aufwärts, die beim Heckträger 16 frontwärts leicht geneigt sind, und hinterschnittene Nuten 54 bilden.

Die in einem Abstand f einander gegenüberstehenden Anschlußstege 52, 53 von Längsträger 15 bzw. Heckträger 16 nehmen ein aufgesetztes Strangpreßprofil 55 auf, das in Fig. 7 zu erkennen ist und nach oben hin als Rinnenprofil 56 endet sowie in etwa halber Höhe mit eine Versteifungssicke 57 versehen ist. Nach unten hin ist eine Profilrippe 58 hakenförmigen Querschnittes angeformt, eine andere Anformung 59 entsteht durch eine Verlängerung der Profilhauptfläche 64 über jene Versteifungssicke 57 hinaus.

Unterhalb Fig. 1 ist neben den Querschnitten des Heckträgers 16, des Strangpreßprofiles 55 und des Längsträgers 15 in Fig. 5 der Mittelträger 18 zu erkennen mit seinem Trägerfuß 19 U-förmigen Querschnittes aus Bodenteil 60 und Profilseiten 61, in die hinterschnittene Nuten 41 und 41a eingebracht sind. Oberhalb dieser Nuten 41, 41a beginnen die in Winkeln t bzw. t₁ von 55° bzw. 35° geneigten Seitenwände 62,62a des Trägerkopfes 20, welche sich an der oberen Trägerkante 63 so vereinigen, daß auch hier eine hinterschnittene Nut 41h entsteht.

Im hinteren Bereich der Längsträger 15 ist ein Bügelprofil 65 vorgesehen, dessen Krümmung den Fig.1,3 und 4 entnommen werden kann. Das Bügelprofil 65 sitzt beidends auf einem Strangpreßprofil 55 auf und besteht aus einem Blechstreifen 66 mit beidends angeformten Stegen 67, welche -- gleichgerichtet geöffnete -- hinterschnittene Nuten 68 bilden.

Ein gegenüber dem Bügelprofil 65 schmales Kastenprofil 70 (Fig.1 und 9) mit beidseits vorgesehenen hinterschnittenen Nuten 71 ragt vom Mittelträger 18 auf und ist heckwärts in einem Winkel r geneigt. Auf das Bügelprofil 65 und das Kastenprofil 70 ist eine Dachschale 74 aufgelegt und durch Klemmstücke angeschlossen.

Mit 75 ist ein lösbarer Heckaufbau aus einem Aluminiumgitterwerk bezeichnet.

**Patentansprüche**

1. Personenkraftwagen mit einem Skelett aus miteinander verbundenen Hohlprofilen als Träger für Teile eines Aufbaus, mit einem Bodenrahmen (14) aus Kastenprofilen (15, 16, 18, 21, 28, 29), wobei der Bodenrahmen (14) sowohl als Tragrahmen dient als auch einen Teil der Fahrzeugaußenseite bildet, dadurch gekennzeichnet, daß die Kastenprofile (15, 16, 18, 21, 28, 29) auf dem Wege des Strangpressens aus Leichtmetall, insbesondere aus Aluminium oder einer Aluminiumlegierung, hergestellt sind, und der Bodenrahmen (14) von Beplankungsprofilen zum Aufbau ergänzt ist, welche in Aufnahmeorganen (35, 41, 54) der/des Kastenprofile/s festgelegt sind.

2. Personenkraftwagen nach Anspruch 1, dadurch gekennzeichnet, daß der Aufbau aus stranggepreßten Leichtmetallprofilen (55, 65, 70), insbesondere aus Aluminium oder einer Aluminiumlegierung, zusammengesetzt ist und diese miteinander auf nicht thermischem Wege verbunden sind.

3. Personenkraftwagen nach Anspruch 1 oder 2, dadurch gekennzeichnet, daß der Bodenrahmen wenigstens zwei Längsträger (15) und eine diese verbindenden, an die Längsträger angefügten Heckträger (16) aufweist, wobei Längsträger und Heckträger als stranggepreßte Hohlprofile mit jeweils wenigstens einer seitlichen hinterschnittenen Nut (35, 35a), als Aufnahmeorgan ausgebildet sind.

4. Personenkraftwagen nach einem der Ansprüche 1 bis 3, dadurch gekennzeichnet, daß die stranggepreßten Längsträger (15), Mittelträger (18) und Heckträger (16) jeweils wenigstens eine hinterschnittene Nut (35,52,53, 41,41a, 41h, 35a) aufweisen, die zum Einsetzen von Aufbauteilen (55,65,70) bzw. Bodenrahmenteilen (21,28,29, 36,37) dienen.

5. Personenkraftwagen nach Anspruch 3 oder 4, dadurch gekennzeichnet, daß die hinterschnittene Nut (35, 35a) an einer Querwand (48) des Längsträgers (15) bzw. des Heckträgers (16) vorgesehen ist, welche das stranggepreßte Hohlprofil in zwei Kammern (44,45) teilt.

6. Personenkraftwagen nach Anspruch 5, dadurch gekennzeichnet, daß die in Einbaulage obenliegende Kammer (44) eine größere Weite aufweist als die darunterliegende, die Nut (35,35a) anbietende Kammer (45), und/oder daß die untere Kammer (45) eine abwärts gerundete Wandung (46) aufweist.

7. Personenkraftwagen nach Anspruch 5 oder 6, gekennzeichnet durch von der oberen Kammerquerwand (51) aufragende Anschlußstege (52,53) die hinterschnittene Nuten bilden.

8. Personenkraftwagen nach wenigstens einem der Ansprüche 1 bis 7, dadurch gekennzeichnet, daß der Mittelträger (18) aus einem U-förmigen Trägerfuß (19) und einem gegenüber diesem geneigten Trägerkopf (20) zu einem einstöckigen stranggepreßten Hohlprofil zusammengesetzt ist, und daß Trägerfuß und Trägerkopf mit jeweils wenigstens einer längsverlaufenden hinterschnittenen Nut (41, 41a,41h) versehen sind.

9. Personenkraftwagen nach Anspruch 8, dadurch gekennzeichnet, daß der Mittelträger (18) zwei in unterschiedlichen Winkeln zum Trägerfuß (19) geneigte Seitenwände (62,62a) aufweist.

10. Personenkraftwagen nach wenigstens einem der Ansprüche 1 bis 9, dadurch gekennzeichnet, daß zwischen Mittelträger (18) und Heckträger (16) zumindest ein Querprofil (21) die Längsträger (15) verbindet, wobei das Querprofil (21) bevorzugt ein I-Profil mit doppeltem Steg (22) ist.

11. Personenkraftwagen nach wenigstens einem der Ansprüche 1 bis 10, dadurch gekennzeichnet, daß zwischen dem Längsträger (15) bzw. zwischen Mittelträger (18) und Querprofil (21) von Zwischenprofilen (29) und Querstäben (28) begrenzte Rahmenfelder vorgesehen und diese gegebenenfalls durch Leichtmetallplatten (36) ausgefacht sind.

12. Personenkraftwagen nach wenigstens einem der Ansprüche 1 bis 11, dadurch gekennzeichnet, daß in eine hinterschnittene Nut (41,41h) des Mittelträgers (18) frontwärts Längsstäbe (37) eingesetzt und andernends an ein Frontprofil (38) angeschlossen sind, welches seinerseits mit hinterschnittenen Nuten (4) versehen ist.

13. Personenkraftwagen nach wenigstens einem der Ansprüche 1 bis 12, dadurch gekennzeichnet, daß auf Längsträger (15) und/oder Heckträger (16) jeweils wenigstens ein stranggepreßtes Profil (55) als Seitenwand aufgesteckt ist.

14. Personenkraftwagen nach Anspruch 13, dadurch gekennzeichnet, daß das stranggepreßte Profil (55) nach oben hin als Rinnenprofil (56) zur Aufnahme von Verbindungselementen od. dgl. endet.

15. Personenkraftwagen nach wenigstens einem der Ansprüche 1 bis 14, dadurch gekennzeichnet, daß zwei parallele Seitenwände (55) durch wenigstens einen Bügel (65) aus stranggepreßtem Leichtmetall verbunden sind.

16. Personenkraftwagen nach Anspruch 15, dadurch gekennzeichnet, daß der Bügel (65) aus einem Blechstreifen (66) und beidends davon angeordneten Stegen (67) zur Bildung hinterschnittener Nuten (68) besteht (Fig. 8).

17. Personenkraftwagen nach wenigstens einem der Ansprüche 1 bis 16, dadurch gekennzeichnet, daß oberhalb des Mittelträgers (18) ein zum Bodenrahmen (14) geneigter Bügel (70) in Form eines Kastenprofils mit seitlichen hinterschnittenen Nuten (71) vorgesehen ist.

18. Personenkraftwagen nach wenigstens einem der Ansprüche 1 bis 17, gekennzeichnet durch Eckverbinder (30) mit einem Paar rechtwinklig zueinander verlaufenden Anschlagflächen (31) und mit Stellschrauben (33), an welche abstandsveränderlich Einschubplatten (34) angefügt sind, wobei die Einschubplatten (34) in die hinterschnittenen Nuten der Längsträger (15) bzw. der Querstäbe (28) und Zwischenprofile (29) eingesetzt sind.

## Claims

1. Passenger car with a skeleton composed of interconnected hollow sections as carriers for parts of a body, with a floor frame (14) consisting of box sections (15, 16, 18, 21, 28, 29), the floor frame (14) both serving as a carrying frame and forming part of the outside of the vehicle, characterized in that the box sections (15, 16, 18, 21, 28, 29) are produced by extrusion from light metal, especially from aluminium or an aluminium alloy, and the floor frame (14) is completed to form the body by boarding sections which are secured in receiving members (35, 41, 54) of the box section or box sections.

2. Passenger car according to Claim 1, characterized in that the body is composed of extruded light-metal sections (55, 65, 70), especially aluminium or an aluminium alloy, and these are connected non-thermally to one another.

3. Passenger car according to Claim 1 or 2, characterized in that the floor frame has at least two side members (15) and a rear member (16) connecting these and attached to the side members, the side members and rear member being designed as extruded hollow sections, each with at least one lateral undercut groove (35, 35a) as a receiving member.

4. Passenger car according to one of Claims 1 to 3, characterized in that the extruded side members (15), centre member (18) and rear member (16) each have at least one undercut groove (35, 52, 53, 41, 41a, 41h, 35a), and these serve for the insertion of body parts (55, 65, 70) or floor-frame parts (21, 28, 29, 36, 37).

5. Passenger car according to Claim 3 or 4, characterized in that the undercut groove (35, 35a) is provided on a transverse wall (48) of the side member (15) or of the rear member (16), the said transverse wall dividing the extruded hollow section into two chambers (44, 45).

6. Passenger car according to Claim 5, characterized in that the upper chamber (44) in the installation position has a larger width than the lower chamber (45) possessing the groove (35, 35a), and/or in that the lower chamber (45) has a wall (46) rounded downwards.

7. Passenger car according to Claim 5 or 6, characterized by connecting webs (52, 53) extending upwards from the upper transverse chamber wall (51) and forming undercut grooves.

8. Passenger car according to at least one of Claims 1 to 7, characterized in that the centre member (18) is composed of a U-shaped member foot (19) and of a member head (20) inclined relative to this to form a one-piece extruded hollow section, and in that the member foot and member head are each equipped with at least one undercut groove (41, 41a, 41h) extending longitudinally.

9. Passenger car according to Claim 8, characterized in that the centre member (18) has two side walls (62, 62a) inclined at different angles relative to the member foot (19).

10. Passenger car according to at least one of Claims 1 to 9, characterized in that, between the centre member (18) and rear member (16), at least one transverse section (21) connects the side members (15), the transverse section (21) preferably being an I-section with a double web (22).

11. Passenger car according to at least one of Claims 1 to 10, characterized in that respectively between the side member (15) and centre member (18) and the transverse section (21) there are frame zones which are limited by intermediate sections (29) and crossbars (28) and which, if appropriate, are compartmentalised by means of light-metal plates (26).

12. Passenger car according to at least one of Claims 1 to 11, characterized in that longitudinal bars (37) are inserted, at the front, into an undercut groove (41, 41h) of the centre member (18) and are connected, at the other end, to a front section (38) which is itself equipped with undercut grooves (40).

13. Passenger car according to at least one of Claims 1 to 12, characterized in that at least one extruded section (55) is respectively attached as a side wall to the side members (15) and/or the rear member (16).

14. Passenger car according to Claim 13, characterized in that the extruded section (55) terminates at the top in the form of a channel section (56) for receiving connecting elements or the like.

15. Passenger car according to at least one of Claims 1 to 14, characterized in that two parallel side walls (55) are connected by means of at least one bow (65) produced from extruded light metal.

16. Passenger car according to Claim 15, characterized in that the bow (65) consists of a sheet-metal strip (66) and of webs (67) arranged at both ends of this to form undercut grooves (68) (Fig. 8).

17. Passenger car according to at least one of Claims 1 to 16, characterized in that above the centre member (18) there is a bow (70) inclined relative to the floor frame (14) and in the form of a box section with lateral undercut grooves (71).

18. Passenger car according to at least one of Claims 1 to 17, characterized by corner connectors (30) with a pair of stop faces (31) extending at right angles to one another and with setscrews (33), to which push-in plates (34) of variable spacing are attached, the push-in plates (34) being inserted into the undercut grooves of the side members (15) or of the crossbars (28) and intermediate sections (29).

## Revendications

1. Véhicule privé comprenant une ossature composée de profilés creux assemblés les uns aux autres et servant de support pour les éléments d'une carrosserie, cette ossature comprenant un cadre de base (14) composé de profilés en caisson (15, 16, 18, 21, 28, 29), le cadre de base (14) constituant à la fois un châssis porteur et une partie du flanc extérieur du véhicule, caractérisé en ce que les profilés en caisson (15, 16, 18, 21, 28, 29) sont fabriqués par filage à la presse en métal léger, en particulier en aluminium ou en un alliage d'aluminium, et le cadre de base (14) est complété par des profilés d'habillage pour constituer la carrosserie, profilés qui sont fixés dans des organes récepteurs (35, 41, 54) du ou des profilé(s) en caisson.

2. Véhicule privé selon la revendication 1, caractérisé en ce que la carrosserie est composée de profilés en métal léger filés à la presse (55, 65, 70), en particulier, de profilés en aluminium ou en un alliage d'aluminium et en ce que ces profilés sont assemblés les uns aux autres par des moyens non thermiques.

3. Véhicule privé selon la revendication 1 ou la revendication 2, caractérisé en ce que le cadre de base possède au moins deux longerons (15) et une poutre arrière (16) qui relie les deux longerons et est assemblée aux longerons, les longerons et la poutre arrière étant constitués par des profilés creux filés à la presse présentant chacun au moins une rainure latérale à contre-dépouille (35, 35a) qui sert d'organe récepteur.

4. Véhicule privé selon une des revendications 1 à 3, caractérisé en ce que les longerons (15), la poutre centrale (18) et la poutre arrière (16) qui sont tous des éléments filés à la presse présentent chacun au moins une rainure à contre-dépouille (35, 52, 53, 41, 41a, 41h, 35a) qui sert à monter des parties de carrosserie (55, 65, 70) ou des parties du cadre de base (21, 28, 29, 36, 37).

5. Véhicule privé selon la revendication 3 ou la revendication 4, caractérisé en ce que la rainure à contre-dépouille (35, 35a) est prévue sur une cloison transversale (48) du longeron (15) ou de la poutre arrière (16) qui divise le profilé creux filé à la presse en deux chambres (44, 45).

6. Véhicule privé selon la revendication 5, caractérisé en ce que la chambre (44) qui est en haut dans la position de montage présente une plus grande largeur que la chambre (45) située au-dessous et qui présente la rainure (35, 35a) et/ou en ce que la chambre inférieure (45) présente une paroi (46) arrondie vers le bas.

7. Véhicule privé selon la revendication 5 ou la revendication 6, caractérisé par des nervures de raccordement (52, 53) qui font saillie sur la paroi transversale supérieure (51) de la chambre et qui forment les rainures à contre-dépouille.

8. Véhicule privé selon au moins une des revendications 1 à 7, caractérisé en ce que la poutre centrale (18) est composée d'un pied de poutre en U (19) et d'une tête de poutre (20) inclinée par rapport au pied, pour constituer un profilé creux en une seule pièce filée à la presse, et en ce que le pied de poutre et la tête de poutre sont munis chacun d'au moins une rainure à contre-dépouille longitudinale (41, 41a, 41h).

9. Véhicule privé selon la revendication 8, caractérisé en ce que la poutre centrale (18) présente deux parois latérales (62, 62a) inclinées d'angles différents par rapport au pied (19) de la poutre.

10. Véhicule privé selon au moins une des revendications 1 à 9, caractérisé en ce qu'au moins un profilé transversal (21) relie les longerons (15) entre la poutre centrale (18) et la poutre arrière (16), le profilé transversal (21) étant de préférence un profilé en I à âme double (22).

11. Véhicule privé selon au moins une des revendications 1 à 10, caractérisé en ce qu'il est prévu, entre le longeron (15) ainsi qu'entre la poutre centrale (18) et le profilé transversal (21) des zones du cadre délimitées par des profilés intermédiaires (29) et des barres transversales (28) et en ce que ces zones du cadre sont éventuellement habillées de panneaux de métal léger (36).

12. Véhicule privé selon au moins une des revendications 1 à 11, caractérisé en ce que, dans une rainure à contre-dépouille (41, 41h) de la poutre centrale (18), sont encastrées des barres longitudinales avant (37), qui sont raccordées à un profilé avant (38) à leur autre extrémité, ce dernier profilé étant muni de son côté de rainures à contre-dépouille (40).

13. Véhicule privé selon au moins une des revendications 1 à 12, caractérisé en ce qu'au moins un profilé filé à la presse (55) est emboîté sur les longerons (15) et/ou la poutre arrière (16), pour servir de paroi latérale.

14. Véhicule privé selon la revendication 13, caractérisé en ce que le profilé filé à la presse (55) se termine vers le haut en formant un profil de gouttière (56) destiné à recevoir des éléments d'assemblage ou équivalents.

15. Véhicule privé selon au moins une des revendications 1 à 14, caractérisé en ce que deux parois latérales (55) sont reliées par au moins un arceau (65) en métal léger filé à la presse.

16. Véhicule privé selon la revendication 15, caractérisé en ce que l'arceau (65) est composé d'une bande de tôle (66) et de nervures (67) qui sont disposées aux deux extrémités de la bande de tôle pour former des rainures à contre-dépouille (68) (figure 8).

17. Véhicule privé selon au moins une des revendications 1 à 16, caractérisé en ce qu'il est prévu, au-dessous de la poutre centrale (18), un arceau (70) incliné par rapport au cadre de base (14) et qui présente la forme d'un profilé en caisson muni de rainures latérales à contre-dépouille (71).

18. Véhicule privé selon au moins une des revendications 1 à 17, caractérisé par des organes d'assemblage d'angle ou équerres (30), comprenant une paire de surfaces de portée (31) qui s'étendent perpendiculairement l'une à l'autre, et munis de vis de serrage (33) auxquelles sont associées des plaquettes encastrées (34) à écartement variable, les plaquettes encastrées (34) étant encastrées dans les rainures à contre-dépouille des longerons (15), des barres transversales (28) ou des profilés intermédiaires (29).

Fig.9

Fig.8

Fig.1

Fig.11

Fig.5

Fig.6

Fig.7

Fig.10

EP 0 229 591 B1

Fig.12

Fig.13

Fig.4

Fig.3

Fig.2

Fig.14

Fig.16

Fig.15

28

28

28

32

30

31

33

34

30

32

33

29

29

34

34

EP 0 229 591 B1